# EUROPÄISCHE PATENTSCHRIFT

(11) **EP 3 268 972 B1**
(45) Veröffentlichungstag und Bekanntmachung des Hinweises auf die Patenterteilung: **20.11.2024**
(21) Anmeldenummer: 16705158.0
(22) Anmeldetag: 18.02.2016
(51) Int. Cl.: H01F 7/18, H01H 47/32

(54) **BAUTEILREDUZIERTE SCHNELLABSCHALTUNG EINES ELEKTRONISCH GEREGELTEN SCHÜTZES**
REDUCED-COMPONENT HIGH-SPEED DISCONNECTION OF AN ELECTRONICALLY CONTROLLED CONTACTOR
COUPURE RAPIDE, PAR UN NOMBRE RÉDUIT DE COMPOSANTS, D'UN CONTACTEUR À RÉGLAGE ÉLECTRONIQUE

(30) Priorität: 13.03.2015 DE 102015103701
(43) Veröffentlichungstag der Anmeldung: 17.01.2018
(73) Patentinhaber: Eaton Intelligent Power Limited, Dublin 4 (IE)
(72) Erfinder: MEID, Wolfgang, 56218 Mülheim-Kärlich (DE)
(74) Vertreter: Epping - Hermann - Fischer
(86) Internationale Anmeldenummer: PCT/EP2016/053406
(87) Internationale Veröffentlichungsnummer: WO 2016/146333

(56) Entgegenhaltungen:
- WO-A2-2011/119669
- DE-A1- 102010 041 018
- DE-A1- 102012 218 983
- DE-A1- 102012 218 988
- DE-A1- 3 232 217

## Beschreibung

### Stand der Technik

Die vorliegende Erfindung betrifft ein Schütz, das eine Spule umfasst, die in einem aktiven Zustand des Schützes stromdurchflossen ist. Die vorliegende Erfindung betrifft zudem ein Verfahren zum Schnellabschalten des Schützes.

Schütze werden zum Schalten von elektrischen Lasten genutzt, beispielsweise von Motoren, Beleuchtungssystemen, Fertigungsanlagen oder ähnlich, vorzugsweise wenn große elektrische Lasten zu schalten sind. Häufig weisen sie eine elektromagnetisch wirkende Schaltvorrichtung (Spule) auf und/oder Halbleiterschalter.

Die Druckschrift DE 43 44 126 A1 offenbart eine elektronische Schnellabschaltung eines solchen Schützes. Das Schütz umfasst einen abschaltbaren Freilaufkreis und eine Spannungsunterdrückungsdiode.

Die Druckschrift DE 10 2010 041 018 A1 beschreibt eine Vorrichtung zum Ansteuern eines Schützes. Dabei umfasst die Vorrichtung eine Ansteuerspule, eine Steuereinheit und eine Haltestromeinheit. Die Haltestromeinheit ist eingangsseitig mit einem ersten und einem zweiten Anschluss einer Spannungsquelle und an einem Ausgang über eine Diode mit einem ersten Anschluss der Ansteuerspule verbunden. Weiter ist der erste Anschluss der Spannungsquelle über einen ersten Schalter mit dem ersten Anschluss der Ansteuerspule und der zweite Anschluss der Spannungsquelle über einen zweiten Schalter mit einem zweiten Anschluss der Ansteuerspule verbunden. Werden beide Schalter gleichzeitig geschlossen, wird die Ansteuerspule direkt mit der Spannungsquelle verbunden und es beginnt ein maximaler Strom zu fließen, der groß genug ist, um den Schütz anziehen zu lassen, so dass das Schütz in den leitenden Zustand übergeht. Der erste und der zweite Schalter werden durch die Steuereinheit gesteuert.

Dokument DE 102012218988 A1 befasst sich mit einer Ansteuerschaltung für mindestens ein Schütz und ein Verfahren zum Betrieb mindestens eines Schützes. Dabei umfasst die Ansteuerschaltung eine Haltespannungseinheit, eine Steuereinheit und eine Stromregelschaltung. Die Ansteuerschaltung versorgt eine Ansteuerspule des Schützes. Die Stromregelschaltung umfasst einen Transistor, eine Diode und einen Widerstand.

Dokument DE102012218983 A1 beschreibt eine Ansteuerschaltung für mindestens zwei Schütze und ein Verfahren zum Betrieb mindestens zweier Schütze. Dabei wird eine Ansteuerschaltung für mindestens zwei Schütze zur Verfügung gestellt, welche mindestens einen ersten Ausgang und mindestens zwei zweite Ausgänge umfasst, über welche die Ansteuerschaltung mit den Anschlüssen mindestens zweier Ansteuerspulen für mindestens zwei Schütze verbindbar ist. Des Weiteren umfasst die Ansteuerschaltung eine Haltespannungseinheit, welche über ihren Ausgang mit dem mindestens einen ersten Ausgang verbunden und dazu ausgebildet ist, eine Haltespannung zur Einstellung eines Haltestroms für die Ansteuerspulen an ihrem Ausgang bereitzustellen. Weiter weist die Ansteuerschaltung eine Regelschaltung auf, welche mit den elektrischen Verbindungen sowie dem Eingang der Haltespannungseinheit verbunden und dazu ausgebildet ist, ein von den in den elektrischen Verbindungen fließenden Strömen abhängendes Steuersignal zu erzeugen und der Haltespannungseinheit zu übermitteln.

Dokument DE 3232217 A1 betrifft eine Schaltungsanordnung zur Entregung von gleichstromerregten Magnetspulen. Die Schaltungsanordnung umfasst vier Dioden, die zu einer Brückengleichrichtung zusammengeschaltet sind. Zwei Netzklemmen sind über einen Schalter mit den Dioden verbunden. Wird der Schalter geschlossen, fällt eine von der Brückengleichrichtung bereitgestellte Spannung über einer Magnetspule und einer Parallelschaltung aus einem Feldeffekttransistor und einem Varistor ab.

### Offenbarung der Erfindung

Aufgabe der vorliegenden Erfindung ist es, ein Schütz zu schaffen, bei dem die Funktion der Schnellabschaltung vereinfacht ist, und der Bauteilaufwand gegenüber dem genannten Stand der Technik verringert ist, so dass das Schütz zudem kostengünstig herstellbar ist, und einen sehr geringen Raumbedarf, insbesondere auf einer Leiterplatine, einnimmt.

Die Aufgabe wird gelöst mit einem Schütz und einem Verfahren zum Schnellabschalten eines Schützes mit den Merkmalen der unabhängigen Patentansprüche. Vorteilhafte Ausführungsformen sind den abhängigen Ansprüchen entnehmbar.

Dafür wird ein Schütz oder ein Relais geschaffen. Das Schütz umfasst:
a) eine Spule, die in einem aktiven Zustand des Schützes stromdurchflossen ist,
b) eine Steuerungseinheit, die zum Steuern des Schützes vorgesehen ist, und
c) einen Spannungswandler, insbesondere ein Netzteil.

Das Schütz zeichnet sich dadurch aus, dass der Spannungswandler im aktiven Zustand zum Wandeln einer Eingangsspannung in eine im aktiven Zustand über der Spule abfallende Spulenspannung vorgesehen, und mit der Steuerungseinheit von einem inaktiven Zustand elektrisch in den aktiven Zustand und zurück schaltbar ist.

Dadurch ist die über der Spule abfallende Spulenspannung mit der Steuerungseinheit unmittelbar zuschaltbar und wieder abschaltbar.

Dabei ist es besonders bevorzugt, dass das Schütz durch Aktivieren des Spannungswandlers vom inaktiven Zustand in den aktiven Zustand eingeschaltet, und durch Deaktivieren des Spannungswandlers vom aktiven Zustand in den inaktiven Zustand ausgeschaltet wird.

Zum Aktivieren / Einschalten sowie zum Deaktivieren / Abschalten des Schützes wird daher der ohnehin erforderliche Spannungswandler sowie die ohnehin für seine Steuerung erforderliche Steuerungseinheit genutzt. Schon deshalb sind der Bauteileaufwand, sowie die Kosten und der Platzbedarf des Schützes gering.

Das Schütz umfasst bevorzugt eine Schaltvorrichtung. Vorzugsweise umfasst die Schaltvorrichtung die Spule sowie einen Schützkontakt. Der Schützkontakt wird im aktiven Zustand des Schützes bevorzugt von der Spule angezogen. Er ist dann eingeschaltet. Im inaktiven Zustand des Schützes ist er bevorzugt ausgeschaltet. Der Schützkontakt wird daher mit der Spule elektromagnetisch betätigt.

Ein Aktivieren des Schützkontaktes ist im Folgenden als Anziehen der Spule bezeichnet. Ein Deaktivieren des Schützkontaktes ist im Folgenden als Abfallen der Spule bezeichnet. Es ist bevorzugt, dass der Schützkontakt in einem Zeitraum von weniger als 50 ms deaktiviert wird, besonders bevorzugt in etwa 20 ms.

Dafür umfasst die Steuerungseinheit bevorzugt ein zentrales Steuerungsmittel wie beispielsweise einen Mikrocontroller oder einen Mikroprozessor. Das Steuerungsmittel ist für die Steuerung eines Anzugs- und eines Haltevorgangs im aktiven Zustand des Schützes, und eines Abschaltvorgangs vom aktiven in den inaktiven Zustand des Schützes verantwortlich. Der Abschaltvorgang ist hier auch als Schnellabschaltung bezeichnet. Er wird mit Hilfe der Steuerungseinheit über den Spannungswandler gesteuert.

Zur Regelung des Anzugsvorgangs umfasst das Schütz bevorzugt einen Stromregler, insbesondere einen Linearregler oder einen Schaltregler, der zum Regeln einer Stromstärke eines die Spule durchfließenden Spulenstromes vorgesehen ist. Dabei ist es bevorzugt, dass die Steuerungseinheit den Stromregler steuert. Besonders bevorzugt steuert die Steuerungseinheit den Stromregler so, dass der die Spule durchfließende Spulenstrom unmittelbar nach dem Aktivieren des Schützes vom inaktiven in den aktiven Zustand größer ist als ein Haltestrom, der fließt, wenn die Spule angezogen und das Schütz im Haltevorgang ist. Der größere Spulenstrom ist zum Anziehen der Spule erforderlich und wird im Folgenden Anzugsstrom genannt. Zum Halten der Spule ist die erforderliche Stromstärke des Spulenstroms geringer. Der beim Halten der Spule fließende Spulenstrom wird im Folgenden Haltestrom genannt. Der Haltestrom wird mittels des Spannungswandlers generiert.

in einer bevorzugten Ausführungsform des Schützes umfasst dieser zudem ein spannungsbegrenzendes Bauteil. Das spannungsbegrenzende Bauteil ist im aktiven Zustand bevorzugt kurzgeschlossen. Dadurch fällt im aktiven Zustand über der Spule die ausgangsseitig des Spannungswandlers abfallende Spulenspannung ab. Bevorzugt wird das spannungsbegrenzende Bauteil für die Schnellabschaltung des Schützes genutzt. Dafür ist es bevorzugt, dass über dem spannungsbegrenzenden Bauteil unmittelbar nach seinem Deaktivieren vom aktiven Zustand in den inaktiven Zustand eine Verbrauchsspannung abfällt.

Zum Kurzschließen des spannungsbegrenzenden Bauteils ist es bevorzugt, dass das Schütz einen elektrischen Schalter umfasst, der im aktiven Zustand durchgeschaltet und im inaktiven Zustand geöffnet ist. Der elektrische Schalter ist in einer bevorzugten Ausführungsform ein Transistor, beispielsweise ein Bipolartransistor, ein Feldeffekttransistor oder ein IGBT (insuitated Gate Bipolar Transistor).

Das spannungsbegrenzende Bauteil ist vorzugsweise ein elektrischer Widerstand, ein Varistor oder eine Diode. Als Diode ist eine Zehnerdiode oder eine Suppressordiode bevorzugt.

Besonders bevorzugt umfasst der Spannungswandler eine Diode, die nach Zurückschalten des Schützes vom aktiven Zustand in den inaktiven Zustand als Freilaufdiode für die Spule dient. Durch die Nutzung der Diode des Spannungswandlers kann eine als Freilaufdiode dienende weitere Diode eingespart werden, so dass der Bauteileaufwand weiter verringert ist. Die Diode dient auch während des Anzugsvorgangs als Freilaufdiode, insbesondere bei einem als Schaltregler ausgeführten Stromregler.

Dabei ist es bevorzugt, dass das spannungsbegrenzende Bauteil und die Diode nach Zurückschalten des Schützes vom aktiven Zustand in den inaktiven Zustand in Reihe mit der Spule angeordnet sind. Dadurch fließt die in der Spule gespeicherte Energie nach dem Zurückschalten des Schützes vom aktiven Zustand in den inaktiven Zustand über das spannungsbegrenzende Bauteil und die Diode ab.

Der Spannungswandler ist bevorzugt ein Gleichspannungswandler (DC/DC- Wandler, Gleichspannungsnetzteil), besonders bevorzugt ein Gleichspannungsnetzteil. Bei Nutzung eines Gleichrichters, der dem Gleichspannungswandler vorgeschaltet ist, ist das Schütz aber auch an eine Wechselspannung anschließbar (AC/DC- Wandler, Wechselspannungsnetzteil).

Die Aufgabe wird weiterhin gelöst mit einem Verfahren zum Schnellabschalten eines Schützes, insbesondere eines solchen Schützes, bei dem nacheinander
- Eine Steuerungseinheit einen Spannungswandler deaktiviert, so dass ein eine Spule durchfließender Spulenstrom unterbrochen wird,
- Ein elektrischer Schalter sich öffnet, und
- Eine über der Spule abfallende Spulenspannung über ein spannungsbegrenzendes Bauteil und über eine Diode des Spannungswandlers entladen wird.

Beim Entladen der über der Spule abfallenden Spulenspannung wird die in der Spule gespeicherte Energie abgebaut.

Das Abschalten / Deaktivieren des Schützes erfordert daher lediglich das Abschalten des Spannungswandlers. Dennoch gewährleistet das Verfahren durch Ausnutzung des spannungsbegrenzenden Bauteils und der Diode des Spannungswandlers die erforderliche sehr schnelle Abschaltung des Schützes. Bevorzugt wird ein Schützkontakt des Schützes nach dem Deaktivieren des Spannungswandlers in weniger als 50 ms deaktiviert.

Dabei werden die für das Schütz ohnehin erforderliche Steuerungseinheit sowie der ohnehin erforderliche Spannungswandler genutzt. Dafür weist das Schütz drei Bauteile auf, nämlich einen dem elektronischen Schalter vorgeschalteten Widerstand, den elektronischen Schalter zum Kurzschließen des spannungsbegrenzenden Bauteils, und das spannungsbegrenzende Bauteil. Der für die (Schnell-) Abschaltung des Schützes erforderliche Bauteileaufwand ist daher insgesamt sehr gering. Dadurch sind die für die Herstellung des Schützes entstehenden Kosten gering und der für das Schütz erforderliche Raumbedarf, insbesondere auf einer Leiterplatine, ist klein.

Im Folgenden wird die Erfindung anhand von Figuren beschrieben. Die Figuren sind lediglich beispielhaft und schränken den allgemeinen Erfindungsgedanken nicht ein.
- Fig. 1a, b und 2a, b: zeigen jeweils eine Ausführungsform eines erfindungsgemäßen Schützes, und zwar in (a) jeweils im aktiven und in (b) jeweils im inaktiven Zustand, und
- Fig. 1c: zeigt eine weitere Ausführungsform eines erfindungsgemäßen Schützes.

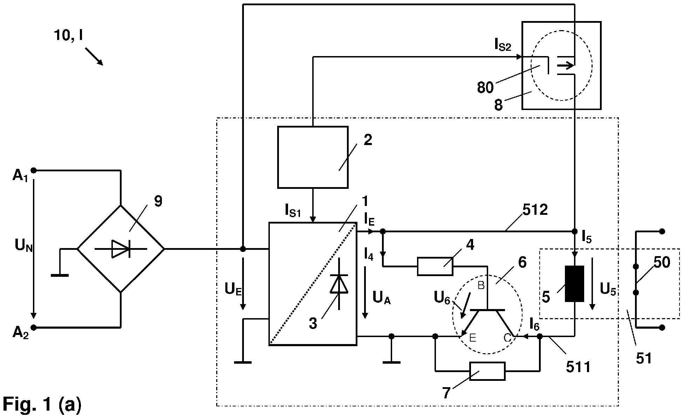

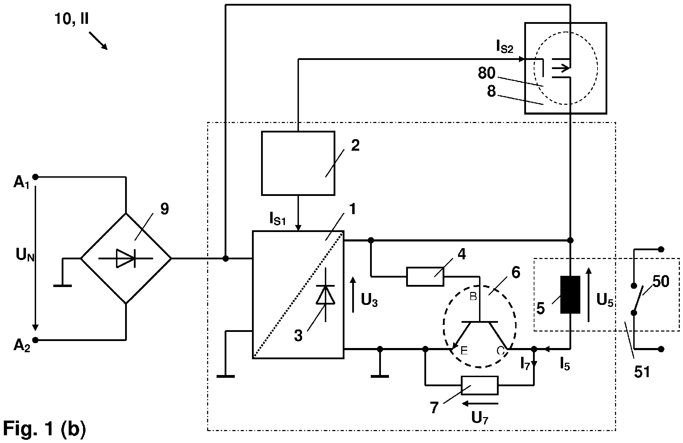

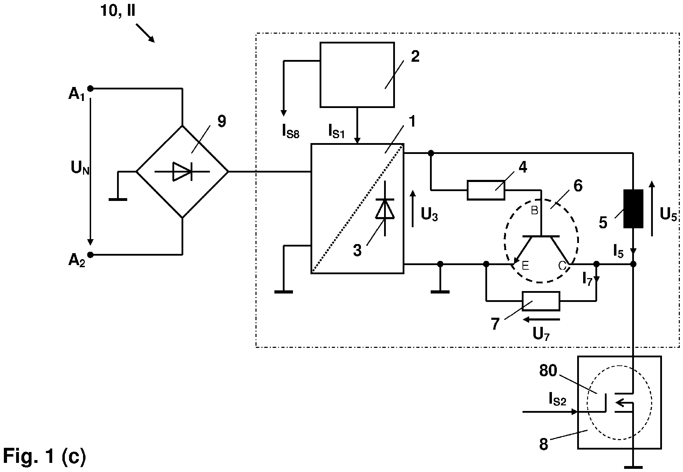

Figur 1 zeigt in (a) einen erfindungsgemäßen Schütz 10 in einem aktiven Zustand I.

Das Schütz 10 wird beispielsweise zum Einschalten und zum Abschalten von vorzugsweise großen elektrischen Lasten (nicht gezeigt) genutzt. Dafür weist es eine elektromagnetisch wirkende Schaltvorrichtung 51 auf, die eine Spule 5 umfasst. In einem aktiven Zustand I des Schützes 10 wird mit der Spule 5 ein Schützkontakt 50 elektromagnetisch betätigt. Dabei kann die Schaltvorrichtung 50 sowohl als Öffner ausgebildet sein, als auch als Schließer. Beispielhaft zeigen Fig. 1 (a) und (b) eine als Schließer ausgeführte Schaltvorrichtung 51.

Ein Aktivieren des Schützkontaktes 50, bei dem sich dieser entweder öffnet oder schließt, ist hier als Anziehen der Spule 5 bezeichnet. Ein Deaktivieren des Schützkontaktes 50, bei dem dieser zurückgeschaltet wird, ist hier als Abfallen der Spule 5 bezeichnet. Das Deaktivieren des Schützkontaktes 50 erfolgt nach einem Umschalten des Schützes 10 vom aktiven Zustand I in einen inaktiven Zustand II. Dabei wird der Schützkontakt 50 in weniger als 50 ms deaktiviert.

Das Schütz 10 umfasst eine Steuerungseinheit 2, die zum Steuern des Schützes 10 vorgesehen ist. Zudem umfasst es die Spule 5. Diese ist im aktiven Zustand I stromdurchflossen.

Weiterhin umfasst das Schütz 10 einen Spannungswandler 1, der der Spule 5 im aktiven Zustand I parallel geschaltet ist. Der Spannungswandler 1 wandelt im aktiven Zustand I eine Eingangsspannung UE in eine über der Spule 5 abfallende Spulenspannung U5. Im inaktiven Zustand II des Schützes 10 wird hingegen eine Diode 3 des Spannungswandlers 1 als Freilaufdiode genutzt, so dass die in der Spule 5 gespeicherte Energie über die Diode 3 des Spannungswandlers 1 abfließen kann.

Dafür umfasst das Schütz 10 außerdem ein spannungsbegrenzendes Bauteil 7 wie beispielsweise einen elektrischer Widerstand, ein Varistor oder eine Diode. Im inaktiven Zustand II sind das spannungsbegrenzende Bauteil 7 und die Diode 3 des Spannungswandlers 1 in Reihe mit der Spule 5 geschaltet. Das spannungsbegrenzende Bauteil 7 ist daher im inaktiven Zustand II in einer ersten, die Spule 5 und den Spannungswandler 1 verbindenden Verbindungsleitung L511 angeordnet.

Im aktiven Zustand I ist es hingegen kurzgeschlossen. Dafür umfasst das Schütz 10 einen elektrischen Schalter 6. Der elektrische Schalter 6 ist beispielsweise als eine Bipolartransistor, eine Feldeffekttransistor oder ein IGBT ausgebildet. Er ist im aktiven Zustand I durchgeschaltet, und im inaktiven Zustand II geöffnet. Das spannungsbegrenzende Bauteil 7 ist dem elektrischen Schalter 6 dafür parallel geschaltet. Daher ist einer der elektrischen Kontakte (nicht bezeichnet) des spannungsbegrenzenden Bauteils 7 am Emitter-Anschluss E des elektrischen Schalters 6, und der andere elektrische Kontakt (nicht bezeichnet) des spannungsbegrenzenden Bauteils 7 am Kollektor-Anschluss C des elektrischen Schalters 6 angeschlossen. Der Basis- Anschluss B des elektrischen Schalters 6 ist über einen elektrischen Widerstand 4 an einer zweiten, die Spule 5 und den Spannungswandler 1 verbindenden Verbindungsleitung L512 angeordnet. Im aktiven Zustand I fließt ein Steuerstrom I4 durch den elektrischen Schalter 6, so dass dieser durchschaltet und das spannungsbegrenzende Bauteil 7 kurzschließt. Im inaktiven Zustand II entfällt hingegen der Steuerstrom I4, so dass sich der elektrische Schalter 6 öffnet.

Diese Anordnung ermöglicht, dass das Schütz 10 durch Deaktivieren des Spannungswandlers 1 deaktivierbar ist. Denn die Ausgangsspannung UA des Spannungswandlers 1 liefert die Schaltspannung U6 zum Durchschalten des elektrischen Schalters 6.

Das Deaktivieren des Spannungswandlers 1 erfolgt mit Hilfe der Steuerungseinheit 2. Die Steuerungseinheit 2 ist auch zum Aktivieren des Spannungswandlers 1 vorgesehen.

Für das Aktivieren und Deaktivieren des Schützes 10 wird hier daher lediglich der Spannungswandler 1 aktiviert oder deaktiviert. Die Steuerungseinheit 2 steuert den Spannungswandler 1 dafür mit Hilfe eines ersten Steuerungssignals I_{S1}.

Um die Stromstärke des die Spule 5 durchfließenden Stromes I5 zu steuern, umfasst das Schütz 10 zudem einen Stromregler 8. Der Stromregler 8 ist beispielsweise als Linearregler oder als Schaltregler ausgeführt. Dargestellt ist hier beispielhaft ein als Schaltregler ausgeführter Stromregler 8, der die Stromstärke des Stromes I5 mittels einer Pulsweitenmodulation steuert. Dafür umfasst er einen elektrischen Regelungsschalter 80, wobei die Steuerungseinheit 2 das Öffnen und Schließen des Regelungsschalters 80 mittels eines zweiten Steuerungssignals I_{S2} steuert. Der Strom I5, der die Spule 5 durchfließt, ist dadurch während eines Anzugsvorgangs unmittelbar nach dem Aktivieren des Schützes 10 größer, als während eines Haltevorgangs bei bereits angezogener Spule 5.

Bei der dargestellten Ausführungsform ist der Spannungswandler 1 ein Gleichspannungsnetzteil. Das Schütz 10 umfasst hier aber beispielhaft zudem einen Gleichrichter 9, über den er an eine Wechselspannung U_{N}, beispielsweise eines Versorgungsspannungsnetzes, angeschlossen ist.

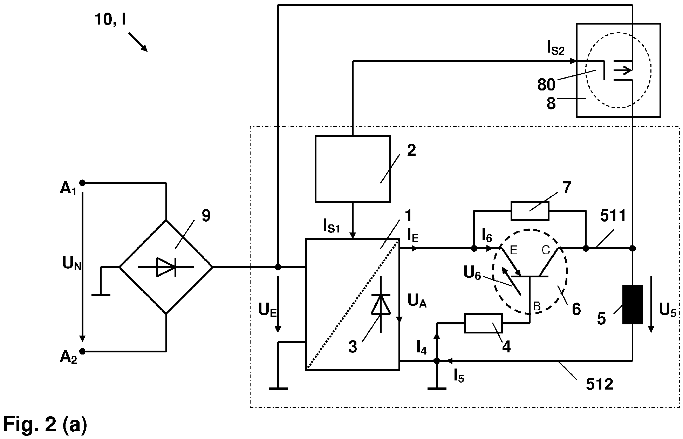

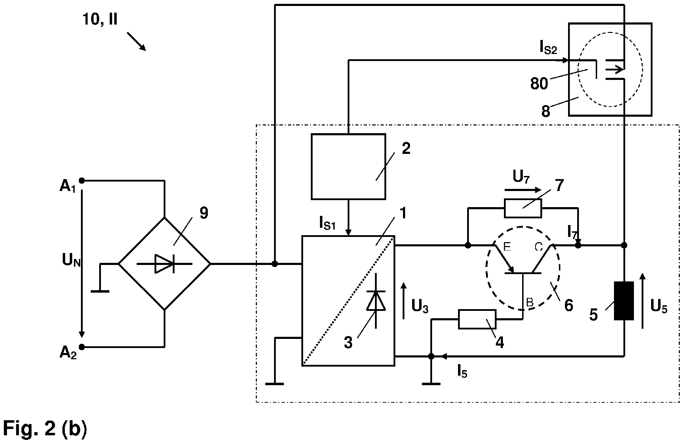

Die Fig. 1 und 2 unterscheiden sich durch den elektrischen Schalter 6, der in Fig. 1 als npn- Transistor, und in Fig. 2 als pnp- Transistor ausgebildet ist. Dabei zeigen die Fig. 1 (a) und 2 (a) jeweils den aktiven Zustand I. Im aktiven Zustand I ist das spannungsbegrenzende Bauteil 7 über den durchgeschalteten elektrischen Schalter 6 kurzgeschlossen, so dass die Ausgangsspannung UA des Spannungswandlers 1 über der Spule 5 abfällt und diese angezogen ist.

Fig. 1 (b) und 2(b) zeigen hingegen den inaktiven Zustand II. Im inaktiven Zustand ist der elektrische Schalter 6 geöffnet, so dass die Spule 5 abgefallen ist und sich über das spannungsbegrenzende Bauteil 7 entlädt.

In den Fig. 1 (a), (b) und 2 (a), (b) ist der elektrische Regelungsschalter 80 jeweils als p-MOS-Transistor ausgeführt. Der elektrische Regelungsschalter 80 kann aber auch durch einen pnp-Transistor ersetzt werden.

Fig. 1 (c) zeigt hingegen das Schütz 10 der Fig. 1 (a) und (b) mit einem als n-MOS-Transistor ausgeführten elektrischen Regelungsschalter 80 im inaktiven Zustand. Auch hier ist der n-MOS-Transistor durch einen npn-Transistor ersetzbar.

In analoger Weise ist auch das Schütz 10 der Fig. 2 mit einem als npn- oder n-MOS-Transistor oder mit einem als pnp- oder p-MOS-Transistor ausgeführten Regelungsschalter 80 herstellbar.

### Bezugszeichenliste

- 1: Spannungswandler, DC/DC- Wandler
- 2: Mikrocontroller, Mikroprozessor
- 3: Freilaufdiode, Zehnerdiode
- 4: Widerstand
- 5: Spule
- 50: Schützkontakt
- 51: Schaltvorrichtung
- 6: Erster Transistor
- 7: Spannungsbegrenzer
- 8: Stromregler, Linearregler, Schaltregler
- 80: Regelungsschalter, Regelungstransistor
- 9: Gleichrichter
- 10: Schütz
- A1, A2: Elektrische Anschlusskontakte
- S: Source
- E: Emitter
- D: Drain
- UN: Versorgungsnetzspannung
- UE: Eingangsspannung des Spannungswandlers
- UA: Ausgangsspannung des Spannungswandlers
- U3: Diodenspannung
- U5: Spulenspannung
- U6: Schaltspannung des elektrischen Schalters
- U7: Begrenzerspannung
- IE: Eingangsstrom
- I4: Steuerstrom
- I5: Spulenstrom
- I6: Transistorstrom
- I7: Begrenzerstrom
- IS1: Steuerstrom für den Spannungswandler
- IS2: Steuerstrom für die Linearregelung oder PWM-Regelung
- I: Aktiver Zustand
- II: Inaktiver Zustand
- L511: Erste Verbindungsleitung
- L512: Zweite Verbindungsleitung

## Patentansprüche

1. Schütz (10), das
a) eine Spule (5), die in einem aktiven Zustand (I) des Schützes (10) stromdurchflossen ist,
b) eine Steuerungseinheit (2), die zum Steuern des Schützes (10) vorgesehen ist, und
c) einen Spannungswandler (1)
umfasst, wobei
d) der Spannungswandler (1) im aktiven Zustand (I) zum Wandeln einer Eingangsspannung (UE) in eine über der Spule (5) abfallende Spulenspannung (U5) vorgesehen ist, und
e) mit der Steuerungseinheit (2) von einem inaktiven Zustand (II) elektrisch in einen aktiven Zustand (I) und zurück schaltbar ist,
wobei das Schütz (10) durch Aktivieren des Spannungswandlers (1) vom inaktiven Zustand (II) in den aktiven Zustand (I) eingeschaltet und durch Deaktivieren des Spannungswandlers (1) vom aktiven Zustand (I) in den inaktiven Zustand (II) ausgeschaltet wird,
wobei das Schütz (10) zur Steuerung einer Stromstärke eines Spulenstroms (15) einen Stromregler (8) umfasst,
**dadurch gekennzeichnet, dass**
das Schütz (10) ein spannungsbegrenzendes Bauteil (7) umfasst, welches im aktiven Zustand (I) kurzgeschlossen ist,
wobei das spannungsbegrenzende Bauteil (7) eine Suppressordiode ist,
wobei zur Schnellabschaltung des Schützes (10) nach seinem Deaktivieren vom aktiven Zustand (I) in den inaktiven Zustand (II) eine Verbrauchsspannung (U7) über dem spannungsbegrenzenden Bauteil (7) abfällt,
wobei das Schütz (10) zum Kurzschließen des spannungsbegrenzenden Bauteils (7) einen elektrischen Schalter (6) umfasst, der im aktiven Zustand (I) durchgeschaltet und im inaktiven Zustand (II) geöffnet ist, und
wobei der elektrischen Schalter (6) ein Bipolartransistor oder ein Bipolartransistor mit isolierter Steuerelektrode ist.

2. Schütz (10) nach Anspruch 1, **dadurch gekennzeichnet, dass** das Schütz (10) einen Schützkontakt (50) umfasst, der im aktiven Zustand (I) des Schützes (10) von der Spule (5) angezogen und eingeschaltet, und im inaktiven Zustand (II) des Schützes (10) ausgeschaltet ist.

3. Schütz (10) nach einem der vorherigen Ansprüche, **dadurch gekennzeichnet, dass** die Steuerungseinheit (2) ein Steuerungsmittel, insbesondere einen Mikrocontroller oder einen Mikroprozessor, umfasst.

4. Schütz (10) nach einem der vorherigen Ansprüche, **dadurch gekennzeichnet, dass** der Stromregler (8) ein Linearregler oder ein Schaltregler ist.

5. Schütz (10) nach einem der Ansprüche 1 bis 4, **dadurch gekennzeichnet, dass** die Steuerungseinheit (2) den Stromregler (8) steuert.

6. Schütz (10) nach einem der vorherigen Ansprüche, **dadurch gekennzeichnet, dass** der Spannungswandler (1) eine Diode (3) umfasst, die nach Zurückschalten des Schützes (10) vom aktiven Zustand (I) in den inaktiven Zustand (II) als Freilaufdiode für die Spule (5) dient.

7. Schütz (10) nach Anspruch 6, **dadurch gekennzeichnet, dass** das spannungsbegrenzende Bauteil (7) und die Diode (3) nach Zurückschalten des Schützes (10) vom aktiven Zustand (I) in den inaktiven Zustand (II) in Reihe mit der Spule (5) angeordnet sind.

8. Schütz (10) nach einem der vorherigen Ansprüche, **dadurch gekennzeichnet, dass** der Spannungswandler (1) ein Gleichspannungswandler ist.

9. Verfahren zum Schnellabschalten eines Schützes (10) nach einem der vorherigen Ansprüche, bei dem ein Schütz nach einem der vorigen Ansprüche bereitgestellt wird und nacheinander
• eine Steuerungseinheit (2) einen Spannungswandler (1) von einem aktiven Zustand (I) elektrisch in einen inaktiven Zustand (II) deaktiviert, so dass ein eine Spule (5) durchfließender Spulenstrom (15) unterbrochen wird, und
• ein elektrischer Schalter (6) sich öffnet,
wobei ein spannungsbegrenzendes Bauteil (7) und eine Diode (3) im inaktiven Zustand (II) in Reihe mit der Spule (5) geschaltet sind, und eine über der Spule (5) abfallende Spulenspannung (U5) über das spannungsbegrenzende Bauteil (7) und über die Diode (3) des Spannungswandlers (1) entladen wird.

10. Verfahren nach Anspruch 9, **dadurch gekennzeichnet, dass** ein Schützkontakt (50) des Schützes (10) nach dem Deaktivieren des Spannungswandlers (1) in weniger als 50ms deaktiviert wird.

## Claims

1. A contactor (10), comprising
a) a coil (5) through which current flows in an active state (I) of the contactor (10),
b) a control unit (2), which is provided for controlling the contactor (10), and
c) a voltage converter (1), wherein
d) the voltage converter (1) is provided in the active state (I) for converting an input voltage (UE) into a coil voltage (U5) which drops across the coil (5), and
e) can be electrically switched from an inactive state (II) to an active state (I) and back by the control unit (2),
wherein the contactor (10) is switched on by activating the voltage converter (1) from the inactive state (II) to the active state (I) and is switched off by deactivating the voltage converter (1) from the active state (I) to the inactive state (II),
wherein the contactor (10) comprises a current regulator (8) for controlling a current intensity of a coil current (15),
**characterized in that**
the contactor (10) comprises a voltage-limiting component (7) which is short-circuited in the active state (I), wherein the voltage-limiting component (7) is a suppressor diode,
wherein a consumption voltage (U7) drops across the voltage-limiting component (7) for high-speed disconnection of the contactor (10) after its deactivation from the active state (I) to the inactive state (II),
wherein the contactor (10) comprises an electrical switch (6) for short-circuiting the voltage-limiting component (7), which is through-connected in the active state (I) and opened in the inactive state (II), and
wherein the electrical switch (6) is a bipolar transistor or a bipolar transistor with an insulated gate.

2. The contactor (10) according to claim 1, **characterized in that** the contactor (10) comprises a contactor contact (50) which is attracted by the coil (5) and switched on in the active state (I) of the contactor (10) and is switched off in the inactive state (II) of the contactor (10).

3. The contactor (10) according to any one of the preceding claims, **characterized in that** the control unit (2) comprises a control means, in particular a microcontroller or a microprocessor.

4. The contactor (10) according to any one of the preceding claims, **characterized in that** the current regulator (8) is a linear regulator or a switching regulator.

5. The contactor (10) according to any one of claims 1 to 4, **characterized in that** the control unit (2) controls the current regulator (8).

6. The contactor (10) according to any one of the preceding claims, **characterized in that** the voltage converter (1) comprises a diode (3) which serves as a freewheeling diode for the coil (5) after the contactor (10) has switched back from the active state (I) to the inactive state (II).

7. The contactor (10) according to claim 6, **characterized in that** the voltage-limiting component (7) and the diode (3) are arranged in series with the coil (5) after the contactor (10) has switched back from the active state (I) to the inactive state (II).

8. The contactor (10) according to any one of the preceding claims, **characterized in that** the voltage converter (1) is a DC-DC converter.

9. A method for the high-speed disconnection of a contactor (10) according to any one of the preceding claims, wherein a contactor according to any one of the preceding claims is provided and, in a sequence,
• a control unit (2) electrically deactivates a voltage converter (1) from an active state (I) to an inactive state (II) so that a coil current (15) flowing through a coil (5) is interrupted, and
• an electrical switch (6) opens,
wherein a voltage-limiting component (7) and a diode (3) are connected in series with the coil (5) in the inactive state (II), and a coil voltage (U5) dropping across the coil (5) is discharged via the voltage-limiting component (7) and via the diode (3) of the voltage converter (1).

10. The method according to claim 9, **characterized in that** a contactor contact (50) of the contactor (10) is deactivated in less than 50 ms after deactivation of the voltage converter (1).

## Revendications

1. Contacteur (10), lequel
a) comprend une bobine (5), laquelle, dans un état actif (I) du contacteur (10), est parcourue par un courant,
b) une unité de commande (2), laquelle est conçue pour commander le contacteur (10), et
c) un convertisseur de tension (1), dans lequel
d) le convertisseur de tension (1) dans l'état actif (I) est conçu pour convertir une tension d'entrée (UE) en une tension de bobine (U5) décroissante au niveau de la bobine (5), et
e) peut être commuté électriquement d'un état inactif (II) à un état actif (I) et inversement avec l'unité de commande (2),
dans lequel le contacteur (10) est commuté par activation du convertisseur de tension (1) de l'état inactif (II) à l'état actif (I) et est désactivé par désactivation du convertisseur de tension (1) de l'état actif (I) à l'état inactif (II),
dans lequel le contacteur (10) comprend un régulateur de courant (8) pour commander une intensité de courant d'un courant de bobine (15),
**caractérisé en ce que**
le contacteur (10) comprend un composant (7) limiteur de tension, lequel est court-circuité dans l'état actif (I), dans lequel le composant (7) limiteur de tension est une diode de suppression,
dans lequel, pour une coupure rapide du contacteur (10) après sa désactivation de l'état actif (I) à l'état inactif (II), une tension de consommation (U7) décroît par l'intermédiaire du composant (7) limiteur de tension,
dans lequel le contacteur (10), pour court-circuiter le composant (7) limiteur de tension, comprend un commutateur (6) électrique, lequel est connecté dans l'état actif (I) et ouvert dans l'état inactif (II), et
dans lequel le commutateur (6) électrique est un transistor bipolaire ou un transistor bipolaire avec une électrode de commande isolée.

2. Contacteur (10) selon la revendication 1, **caractérisé en ce que** le contacteur (10) comprend un contact de contacteur (50), lequel, dans l'état actif (I) du contacteur (10), est attiré par la bobine (5) et activé, et, dans l'état inactif (II) du contacteur (10), est désactivé.

3. Contacteur (10) selon l'une quelconque des revendications précédentes, **caractérisé en ce que** l'unité de commande (2) comprend un moyen de commande, en particulier un microcontrôleur ou un microprocesseur.

4. Contacteur (10) selon l'une quelconque des revendications précédentes, **caractérisé en ce que** le régulateur de courant (8) est un régulateur linéaire ou un régulateur à découpage.

5. Contacteur (10) selon l'une quelconque des revendications 1 à 4, **caractérisé en ce que** l'unité de commande (2) commande le régulateur de courant (8).

6. Contacteur (10) selon l'une quelconque des revendications précédentes, **caractérisé en ce que** le convertisseur de tension (1) comprend une diode (3), laquelle, après le retour du contacteur (10) de l'état actif (I) à l'état inactif (II), sert de diode de roue libre pour la bobine (5).

7. Contacteur (10) selon la revendication 6, **caractérisé en ce que** le composant (7) limiteur de tension et la diode (3), après le retour du contacteur (10) de l'état actif (I) à l'état inactif (II), sont agencés en série avec la bobine (5).

8. Contacteur (10) selon l'une quelconque des revendications précédentes, **caractérisé en ce que** le convertisseur de tension (1) est un convertisseur de tension continue.

9. Procédé de coupure rapide d'un contacteur (10) selon l'une quelconque des revendications précédentes, selon lequel un contacteur selon l'une quelconque des revendications précédentes est fourni et en séquence
• une unité de commande (2) désactive électriquement un convertisseur de tension (1) d'un état actif (I) à un état inactif (II), de sorte qu'un courant de bobine (15) parcourant une bobine (5) est interrompu, et
• un commutateur (6) électrique s'ouvre,
dans lequel un composant (7) limiteur de tension et une diode (3) sont connectés en série avec la bobine (5) dans l'état inactif (II), et une tension de bobine (U5) décroissant au niveau de la bobine (5) est déchargée par l'intermédiaire du composant (7) limiteur de tension et par l'intermédiaire de la diode (3) du convertisseur de tension (1).

10. Procédé selon la revendication 9, **caractérisé en ce qu'**un contact de contacteur (50) du contacteur (10) est désactivé, après la désactivation du convertisseur de tension (1), en moins de 50 ms.
